# EUROPEAN PATENT APPLICATION

(11) **EP 2 927 448 A1**
(43) Date of publication of application: **07.10.2015**
(21) Application number: 13860089.5
(22) Date of filing: 02.12.2013
(51) Int. Cl.: F01N 3/08, B01D 53/94, F01N 3/24

(54) **EXHAUST PURIFICATION SYSTEM OF INTERNAL COMBUSTION ENGINE**

(30) Priority: 03.12.2012 JP 2012264124
(71) Applicant: TOYOTA JIDOSHA KABUSHIKI KAISHA, Toyota-shi, Aichi-ken, 471-8571 (JP)
(72) Inventor: KOBAYAKAWA, Satoshi, Toyota-shi Aichi 471-8571 (JP)
(74) Representative: Smith, Samuel Leonard
(86) International application number: PCT/JP2013/082314
(87) International publication number: WO 2014/087952

(57) **Abstract**

An object of the present invention is to increase the NO_{X} purification rate of an unactivated SCR catalyst in an exhaust emission control system for an internal combustion engine that has an oxidation catalyst and the SCR catalyst disposed downstream of the oxidation catalyst. In order to achieve this object, the present invention provides an exhaust emission control system for an internal combustion engine, including an oxidation catalyst disposed in an exhaust passage of the internal combustion engine, an SCR catalyst that is disposed downstream of the oxidation catalyst in the exhaust passage, and a supply device for supplying unburnt fuel to the oxidation catalyst when the SCR catalyst is not yet activated, wherein the amount of NO₂ that flows into the SCR catalyst is increased by reducing the amount of unburnt fuel supplied, when a low-load operation of the internal combustion engine is performed.

## Description

### TECHNICAL FIELD

The present invention relates to an exhaust emission control system that has an oxidation catalyst disposed in an exhaust passage of an internal combustion engine and a selective reduction catalyst (also described hereinafter as selective catalytic reduction (SCR) catalyst) disposed downstream of the oxidation catalyst in the exhaust passage.

### BACKGROUND ART

An exhaust emission control system having an oxidation catalyst and SCR catalyst disposed in an exhaust passage of an internal combustion engine has conventionally been known. A technique for supplying unburnt fuel (hydrocarbon (HC)) to the oxidation catalyst for the purpose of increasing the temperatures of the oxidation catalyst and the SCR catalyst has been proposed as the exhaust emission control system (see

Patent Literature 1).

Patent Literature 2 discloses a technique pertaining to an exhaust emission control system with an oxidation catalyst, an SCR catalyst, and a bypass passage bypassing the oxidation catalyst, in which the amount of exhaust passing through the bypass passage is increased when nitrogen dioxide (NO₂) is generated excessively by the oxidation catalyst.

Patent Literature 3 discloses a technique for increasing the temperature of the SCR to a predetermined temperature by supplying unburnt fuel to the oxidation catalyst when the ratio of NO₂ in NO_{X} flowing out of the oxidation catalyst is 50%.

### PRIOR ART DOCUMENTS

### Patent Documents

Patent Literature 1: Japanese Patent Application Publication No. 2002-295277
Patent Literature 2: Japanese Patent Application Publication No. 2005-023921
Patent Literature 3: Japanese Patent Application Publication No. 2012-007557

### DISCLOSURE OF THE INVENTION

### Problem To Be Solved By The Invention

Incidentally, continuous supply of unburnt fuel during a period between the completion of the activation of the oxidation catalyst and the start of the activation of the SCR catalyst is likely to lower the NO_{X} purification rate of the SCR catalyst. For instance, when low-load operation of the internal combustion engine is started during the period between the completion of the activation of the oxidation catalyst and the start of the activation of the SCR catalyst, the amount of increase in the temperature of the SCR catalyst in relation to the amount of unburnt fuel supplied becomes low, rising the risk of lowering the NO_{X} purification rate prior to the activation of the SCR catalyst.

The present invention was contrived in view of the foregoing circumstances, and an object thereof is to provide a technique for an exhaust emission control system for an internal combustion engine that has an oxidation catalyst and an SCR catalyst disposed downstream of the oxidation catalyst, the technique being capable of increasing the NO_{X} purification rate when an SCR catalyst is not yet activated.

### Means For Solving The Problem

In order to solve the foregoing problem, the present invention accomplishes the following: in an exhaust emission control system for an internal combustion engine, which has an oxidation catalyst disposed in an exhaust passage of the internal combustion engine, a selective reduction catalyst (SCR catalyst) that is disposed downstream of the oxidation catalyst in the exhaust passage, and a supply device for supplying unburnt fuel to the oxidation catalyst when the SCR catalyst is not yet activated, the amount of NO₂ that flows into the SCR catalyst is increased by reducing the amount of unburnt fuel supplied, when a low-load operation of the internal combustion engine is performed.

Specifically, the exhaust emission control system for an internal combustion engine according to the present invention has:
an oxidation catalyst disposed in an exhaust passage of the internal combustion engine;
a selective reduction catalyst (SCR catalyst) that is disposed downstream of the oxidation catalyst in the exhaust passage;
temperature increasing means for increasing the temperature of exhaust flowing out of the oxidation catalyst by supplying unburnt fuel to the oxidation catalyst, when the oxidation catalyst is activated but the selective reduction catalyst (SCR catalyst) is not activated; and
control means for reducing the amount of unburnt fuel to be supplied from the temperature increasing means, when a low-load operation of the internal combustion engine is performed during a period in which the unburnt fuel is supplied to the oxidation catalyst by the temperature increasing means.

As a method for activating the oxidation catalyst and the SCR catalyst, the following method is used in general: a method for supplying a small amount of unburnt fuel to the oxidation catalyst prior to the activation of the oxidation catalyst and then supplying the oxidation catalyst with unburnt fuel in an amount greater than the amount supplied prior to the activation of the oxidation catalyst during a period between the activation of the oxidation catalyst and the activation of the SCR catalyst.

Incidentally, when the low-load operation of the internal combustion engine is performed, the temperature of exhaust to be emitted from the internal combustion engine drops. Therefore, even when oxidation reaction heat of unburnt fuel is applied to the exhaust in the oxidation catalyst, the amount of heat transmitted from the exhaust to the SCR catalyst becomes low. In addition, when a large amount of unburnt fuel is supplied to the oxidation catalyst, most of carbon monoxide (NO) of the exhaust is not oxidized in the oxidation catalyst, resulting in a reduction in the amount of NO₂ that flows into the SCR catalyst. Moreover, prior to the activation of the SCR catalyst, in some cases the amount of increase in the NO_{X} purification rate becomes lower than the amount of increase in the temperature of the SCR catalyst. Therefore, when the amount of unburnt fuel to be supplied to the oxidation catalyst increases when the low-load operation of the internal combustion engine is started during the period between the activation of the oxidation catalyst and the activation of the SCR catalyst, the NO_{X} purification rate of the SCR catalyst is likely to drop.

When the low-load operation of the internal combustion engine is performed, a method is considered in which the amount of NO_{X} generated upon combustion of the fuel in the cylinders of an internal combustion engine is reduced by supplying some of the exhaust into the cylinders in the form of exhaust gas recirculation (EGR) gas. However, when the SCR catalyst is not activated, there is a possibility that the internal combustion engine enters a cold state, making it difficult to supply a sufficient amount of EGR gas to reduce the amount of NO_{X} generated.

On the other hand, the exhaust emission control system for an internal combustion engine according to the present invention, when (during the period in which) the low-load operation of the internal combustion engine is performed during the period between the activation of the oxidation catalyst and the activation of the SCR catalyst, the amount of unburnt fuel to be supplied to the oxidation catalyst is reduced. In this case, because the amount of unburnt fuel to be oxidized in the oxidation catalyst is reduced, the amount of NO to be oxidized in the oxidation catalyst increases. As a result, the amount of NO₂ (NO₂ ratio) contained in the exhaust flowing into the SCR catalyst increases. When the exhaust with a high NO₂ ratio flows into the SCR catalyst, the NO_{X} purification rate of the SCR catalyst becomes higher than when the exhaust gas that does not include much NO₂ flows into the SCR catalyst.

Therefore, the exhaust emission control system for an internal combustion engine according to the present invention can increase the NO_{X} purification rate of the SCR catalyst when low-load operation of the internal combustion engine is performed during the period between the activation of the oxidation catalyst and the activation of the SCR catalyst. In other words, the exhaust emission control system for an internal combustion engine according to the present invention can increase, as much as possible, the NO_{X} purification rate of the SCR catalyst when it is difficult to supply a sufficient amount of EGR gas.

Note that such expression as "reducing the amount of unburnt fuel" means not only to reduce the amount of unburnt fuel by values greater than zero but also to reduce the amount of unburnt fuel to zero (to stop supplying the unburnt fuel).

In the exhaust emission control system for an internal combustion engine according to the present invention, when the temperature of the SCR catalyst becomes equal or higher than a predetermined temperature, the control means may execute either an increasing process for increasing an intake air amount of the internal combustion engine or a reducing process for reducing the intake air amount, whichever process that increases the NO_{X} purification rate of the SCR catalyst higher. The "predetermined temperature" here means, for example, the lowest temperature at which the NO_{X} purification rate of the SCR catalyst increases as the NO₂ ratio increases.

When the reducing process for reducing the intake air amount is executed when the temperature of the SCR catalyst is equal to or higher than the predetermined temperature, the NO₂ ratio of the exhaust flowing into the SCR catalyst increases. As a result, the NO_{X} purification rate of the SCR catalyst rises.

In a case where the temperature of the exhaust is high, there is a possibility that the NO_{X} purification rate of the SCR catalyst becomes higher when the increasing process for increasing the intake air amount is executed as compared to when the reducing process for reducing the intake air amount is executed. In other words, when the increasing process for increasing the intake air amount is executed when the temperature of the exhaust is high, the speed at which the temperature of the SCR catalyst increases accelerates, leading to an acceleration of the speed at which the NO_{X} purification rate increases.

On the other hand, the implementation of the increasing process for increasing the intake air amount of the internal combustion engine or the reducing process for reducing the intake air amount, whichever increases the NO_{X} purification rate of the SCR catalyst, can further increase the NO_{X} purification rate of the SCR catalyst.

Note that the implementation of the increasing process for increasing the intake air amount when the temperature of the SCR catalyst is high enough is likely to increase the temperature of the SCR catalyst excessively. Thus, when the temperature of the SCR catalyst is high enough, the reducing process may be executed prior to the increasing process for increasing the intake air amount.

Also, in the exhaust emission control system for an internal combustion engine according to the present invention, when the temperature of the SCR catalyst drops from the predetermined temperature or higher to less than the predetermined temperature, the control means may reduce the amount of unburnt fuel to be supplied to the oxidation catalyst by the temperature increasing means.

When low-load operation of the internal combustion engine (e.g., idling) is continued while the temperature of the SCR catalyst is equal to or higher than the predetermined temperature, there is a possibility that the temperature of the SCR catalyst drops to less than the predetermined temperature. In a case where the temperature of the SCR catalyst decreases from the predetermined temperature or higher to less than the predetermined temperature, the temperature increasing means supplies unburnt fuel to the oxidation catalyst. However, even when unburnt fuel is supplied to the oxidation catalyst while the low-load operation of the internal combustion engine is continued as described above, the speed at which the temperature of the SCR catalyst increases does not rise enough, and the NO_{X} purification rate of the SCR catalyst drops.

On the other hand, when the amount of unburnt fuel to be supplied to the oxidation catalyst by the temperature increasing means is reduced when the temperature of the SCR catalyst drops from the predetermined temperature or higher to less than the predetermined temperature, the amount of decrease in the NO_{X} purification rate of the SCR catalyst can be kept low.

### Effects Of The Invention

According to the present invention, the exhaust emission control system for an internal combustion engine that has an oxidation catalyst and an SCR catalyst disposed downstream of the oxidation catalyst can increase the NO_{X} purification rate as much as possible when the SCR catalyst is not yet activated.

### Brief Description Of The Drawings

FIG. 1 is a diagram showing a schematic configuration of an internal combustion engine to which the present invention is applied, and a pumping system of the internal combustion engine;
FIG. 2 is a diagram schematically showing a map defining an operation region where unburnt fuel is supplied and an operation region where the supply of the unburnt fuel is stopped;
FIG. 3 is a diagram for explaining a low-load operation region where the supply of the unburnt fuel is stopped;
FIG. 4 is a diagram for explaining a high-load operation region where the unburnt fuel is supplied;
FIG. 5 is a timing chart that shows chronological changes in the amount of unburnt fuel supplied to an oxidation catalyst, the temperature of an SCR catalyst, the NO₂ ratio of exhaust emitted from the oxidation catalyst, and the NO_{X} purification rate of the SCR catalyst, the changes being caused when a temperature increasing process is executed;
FIG. 6 is a diagram showing changes in the NO_{X} purification rate during a period in which the temperature of the SCR catalyst increases from a lower limit value to an activating temperature;
FIG. 7 is a flowchart showing a processing routine that is executed by an ECU at the time of the execution of the temperature increasing process; and
FIG. 8 is a flowchart showing a processing routine that is executed by the ECU when the temperature of the SCR catalyst increases to the activating temperature or higher.

### The Best Mode For Carrying Out The Invention

Specific embodiments of the present invention are described hereinafter based on the drawings. The sizes, materials, shapes, relative arrangements and the like of the components described in the present embodiments are not intended to limit the technical scope of the present invention thereto, unless otherwise specifically stated.

### <Embodiment 1>

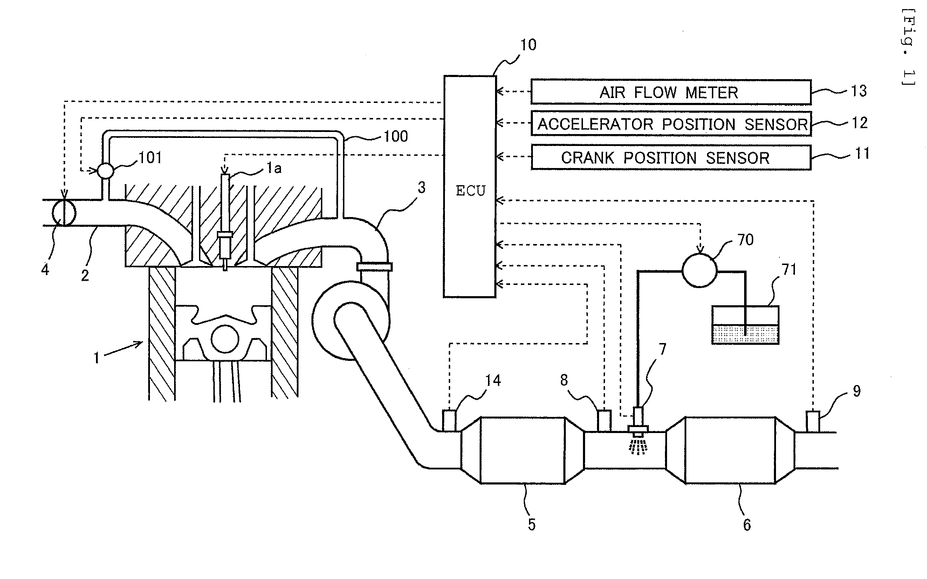

First of all, the first embodiment of the present invention is described based on FIGS. 1 to 7. FIG. 1 is a diagram showing a schematic configuration of an internal combustion engine to which the present invention is applied, and a pumping system of the internal combustion engine. The internal combustion engine 1 shown in FIG. 1 is a compression ignition internal combustion engine (diesel engine) with a plurality of cylinders. The internal combustion engine to which the present invention is applied may not only be a compression ignition internal combustion engine but also a spark ignition internal combustion engine (gasoline engine) operated by lean combustion.

The internal combustion engine 1 has a fuel injection valve 1a for injecting fuel into the cylinders. An intake passage 2 and an exhaust passage 3 are connected to the internal combustion engine 1. The intake passage 2 is a passage that guides fresh air (air) in the atmosphere to the cylinders of the internal combustion engine 1. The exhaust passage 3 is a passage that circulates the burnt gas (exhaust) that is emitted from the cylinders of the internal combustion engine 1.

An intake throttle valve (a throttle valve) 4 is disposed in the middle of the intake passage 2. The throttle valve 4 is a valve mechanism for regulating the amount of air taken into the cylinders of the internal combustion engine 1 by changing the cross-sectional area of the intake passage 2. Note that the throttle valve 4 has a valve element and an electric motor for opening/closing the valve element, in which the electric motor is controlled by an ECU 10 described hereinafter.

A first catalyst casing 5 and a second catalyst casing 6 are disposed in series in the middle of the exhaust passage 3 at the upstream side. The first catalyst casing 5 is a tubular casing having an oxidation catalyst and a particulate filter installed therein. The oxidation catalyst may be supported by a catalyst support disposed upstream of the particulate filter or by the particulate filter. The oxidation catalyst and the particulate filter may be contained in casings that are independent from each other.

The second catalyst casing 6 is a tubular casing having a catalyst support supporting a selective reduction catalyst (SCR catalyst) thereon. The catalyst support is obtained by, for example, coating a monolith substrate with an alumina-based or zeolite-based active substance (support), the monolith substrate being composed of a cordierite or Fe-Cr-Al-based heat-resistant steel and having a honeycomb cross section. Furthermore, a precious metal catalyst (e.g., platinum (Pt), palladium (Pd), etc.) with an oxidative capacity is supported on the catalyst support.

Note that the catalyst support that supports the oxidation catalyst may be disposed downstream of the SCR catalyst in the second catalyst casing 6. The oxidation catalyst in this case is to oxidize a reducing agent that passes through the SCR catalyst out of the reducing agent supplied to the SCR catalyst.

An adding valve 7 for adding (injecting) an additive, a NH₃ or a precursor of NH₃, is attached to the exhaust passage 3 between the first catalyst casing 5 and the second catalyst casing 6. The adding valve 7 is a valve unit that has an injection hole opened and closed by the motion of a needle. The adding valve 7 is connected to a tank 71 by a pump 70. The pump 70 suctions the additive stored in the tank 71 and pneumatically feeds the suctioned additive to the adding valve 7. The adding valve 7 injects into the exhaust passage 3 the additive that is pneumatically fed from the pump 70. Note that the adding valve 7 and pump 70 are an aspect of a reducing agent supply device according to the present invention.

A solution such as urea or ammonium carbamate, or NH₃ gas can be used as the additive stored in the tank 71. The present embodiment describes an example of using a urea aqueous solution as the additive.

Once injected from the adding valve 7, the urea aqueous solution flows into the second catalyst casing 6 along with exhaust. At this moment, the urea aqueous solution undergoes pyrolysis or hydrolysis under the heat of exhaust gas and the second catalyst casing 6. Pyrolysis or hydrolysis of the urea aqueous solution generates ammonia (NH₃). The generated ammonia (NH₃) is absorbed by (or stored in) the SCR catalyst. The ammonia (NH₃) absorbed by the SCR catalyst reacts with nitrogen oxide (NO_{X}) contained in the exhaust and generates nitrogen (N₂) and water (H₂O). In other words, the ammonia (NH₃) functions as a reducing agent for the nitrogen oxide (NO_{X}).

The internal combustion engine 1 also has an EGR device that includes an EGR passage 100 communicating the intake passage 2 to the exhaust passage 3 and an EGR valve 101 for changing the cross-sectional area of the EGR'passage 100. The EGR passage 100 is a passage for guiding some of the exhaust of the exhaust passage 3 as EGR gas to the intake passage 2 at the downstream of the throttle valve 4. The EGR valve 101 is a valve mechanism for changing the cross-sectional area of the EGR passage 100 and thereby regulating the amount of EGR gas supplied from the exhaust passage 3 to the intake passage 2. Note that the EGR valve 101 has a valve element and an electric motor for opening/closing the valve element, in which the electric motor is controlled by the ECU 10.

The internal combustion engine 1 with such a configuration is installed side-by-side with the ECU 10. The ECU 10 is an electronic control unit with a CPU, a ROM, a RAM, a backup RAM, and the like. The ECU 10 is electrically connected to a first exhaust temperature sensor 8, a second exhaust temperature sensor 9, a crank position sensor 11, an accelerator position sensor 12, an air flow meter 13, an A/F sensor 14, and various other sensors.

The first exhaust temperature sensor 8 is disposed in the exhaust passage 3 between the first catalyst casing 5 and the second catalyst casing 6, and outputs an electric signal correlating with the temperature of the exhaust flowing out of the first catalyst casing 5, that is, the temperature of the oxidation catalyst stored in the first catalyst casing 5. The second exhaust temperature sensor 9 is disposed downstream of the second catalyst casing 6 in the exhaust passage 3, and outputs an electric signal correlating with the temperature of the exhaust flowing out of the second catalyst casing 6, that is, the temperature of the SCR catalyst stored in the second catalyst casing 6. The crank position sensor 11 outputs an electric signal correlating with the rotational position of the output shaft (crank shaft) of the internal combustion engine 1. The accelerator position sensor 12 outputs an electric signal correlating with the amount of operation (accelerator position) of the accelerator pedal. The air flow meter 13 outputs an electric signal correlating with the amount of air taken into the internal combustion engine 1 (intake air amount). The A/F sensor 14 is disposed upstream of the first catalyst casing 5 in the exhaust passage 3 and outputs an electric signal correlating with the fuel-air ratio of the exhaust.

The ECU 10 is electrically connected to the fuel injection valve 1a, throttle valve 4, adding valve 7, pump 70, EGR valve 101, and various other devices. The ECU 10 electrically controls these various devices based on the foregoing output signals of the various sensors. For instance, in addition to the known control such as fuel injection control of the internal combustion engine 1 and addition control for intermittently injecting the additive from the adding valve 7, the ECU 10 executes a temperature increasing process for increasing the temperatures of the oxidation catalyst stored in the first catalyst casing 5 and the SCR catalyst stored in the second catalyst casing 6 when these temperatures are low. A method for executing the temperature increasing process according to the present embodiment is described hereinafter.

Cold start of the internal combustion engine 1 brings about a state in which the oxidation catalyst and the selective reduction catalyst are not activated, that is, a state in which the oxidation catalyst cannot oxidize the unburnt fuel components (HC, CO, etc.) of the exhaust and the selective reduction catalyst cannot reduce the nitrogen oxide (NO_{X}) of the exhaust. For this reason, the oxidation catalyst and selective reduction catalyst need to be activated promptly.

In contrast, there is considered a method for supplying a small amount of unburnt fuel to the oxidation catalyst prior to the activation of the oxidation catalyst and SCR catalyst and supplying the oxidation catalyst with unburnt fuel in an amount larger than the amount supplied prior to the activation of the oxidation catalyst, during a period between the activation of the oxidation catalyst and the activation of the SCR catalyst. Note that a method for adding fuel to the exhaust passage 3 at the upstream of the oxidation catalyst or performing post injection from the fuel injection valve into an expansion stroke cylinder or an exhaust stroke cylinder can be used as the method for supplying unburnt fuel to the oxidation catalyst.

Incidentally, when low-load operation of the internal combustion engine 1 is performed during the period between the activation of the oxidation catalyst and the activation of the SCR catalyst, the temperature of the exhaust to be emitted from the internal combustion engine 1 falls. Therefore, even when oxidation reaction heat of the unburnt fuel is generated in the oxidation catalyst, the amount of heat transmitted from the exhaust to the SCR catalyst becomes low. In addition, when a large amount of unburnt fuel is supplied to the oxidation catalyst, most of the carbon monoxide (NO) of the exhaust is not oxidized in the oxidation catalyst, resulting in a reduction in the amount of NO₂ flowing into the SCR catalyst. Moreover, when the temperature of the SCR catalyst is lower than a lower limit value, in some cases the amount of increase in the NO_{X} purification rate becomes lower than the amount of increase in temperature of the SCR catalyst. Therefore, when the amount of unburnt fuel to be supplied to the oxidation catalyst increases at the time of the low-load operation of the internal combustion engine 1 during the period between the activation of the oxidation catalyst and the activation of the SCR catalyst, the NO_{X} purification rate of the SCR catalyst is likely to drop.

On the other hand, there is also considered a method for supplying some of the exhaust into the cylinders of the internal combustion engine 1 as EGR gas and thereby reducing the amount NO_{X} generated when low-load operation of the internal combustion engine 1 is performed. However, when the SCR catalyst is not activated, a high possibility that the internal combustion engine 1 is in a cold state makes it difficult to supply the EGR gas enough to reduce the amount of amount of NO_{X} generated.

In the temperature increasing process according to the present embodiment, therefore, during the period between the activation of the oxidation catalyst and the activation of the SCR catalyst, the ECU 10 stops the supply of the unburnt fuel to the oxidation catalyst when the temperature of the SCR catalyst is equal to or higher than the lower limit value and low-load operation of the internal combustion engine 1 is performed. The "lower limit value" is the lowest temperature at which the SCR catalyst can purify the NO_{X} under the condition that, for example, NO₂ is present in the exhaust.

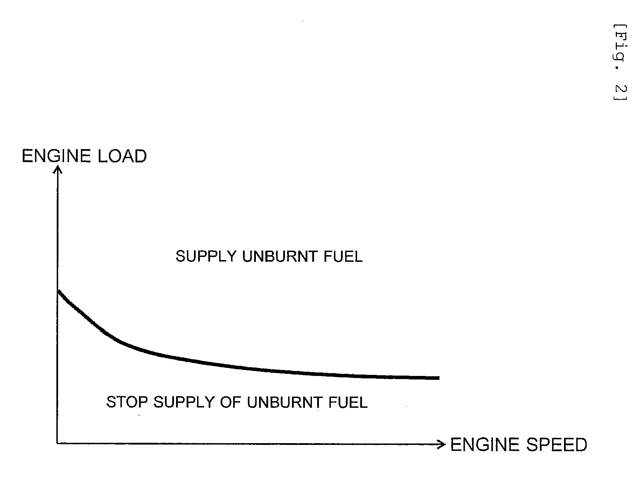

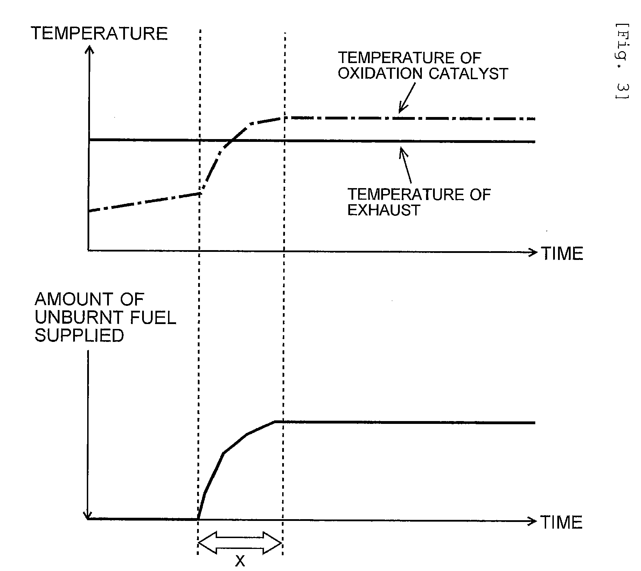

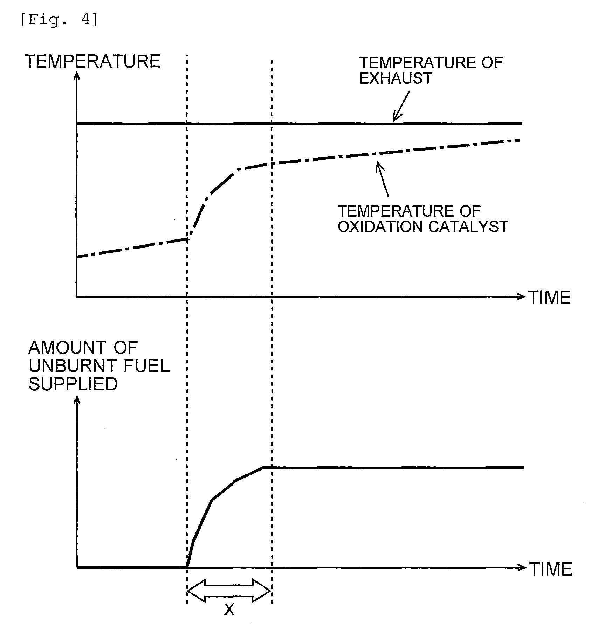

More specifically, in accordance with the map shown in FIG. 2, the ECU 10 switches between supplying unburnt fuel and stopping the supply thereof. FIG. 2 is a schematic diagram of the map in which a load and rotational speed of the internal combustion engine 1 are parameters, the map being defined beforehand by a matching process that uses the experiments and the like. As shown in FIG. 2, in a low-load operation region in which the temperature of the exhaust is low, unburnt fuel is not supplied to the oxidation catalyst. In a high-load operation region in which the temperature of the exhaust is high, unburnt fuel is supplied to the oxidation catalyst. The "low-load operation region" is an operation region in which, under the assumption that unburnt fuel is supplied to the oxidation catalyst, a temperature increasing effect of the oxidation catalyst that is obtained by the reaction heat of the unburnt fuel and a temperature lowering effect of the oxidation catalyst that is obtained by the heat transmitted from the oxidation catalyst to the exhaust cancel each other out. Specifically, the low-load operation region is an operation region in which the temperature of the oxidation catalyst exceeds the temperature of the exhaust when the temperature of the oxidation catalyst is increased by the supply of unburnt fuel, as shown in FIG. 3. The "high-load operation region," on the other hand, is an operation region in which can be attained, under the assumption that unburnt fuel is supplied to the oxidation catalyst, a synergy between the temperature increasing effect of the oxidation catalyst that is obtained by the reaction heat of the unburnt fuel and the temperature increasing effect of the oxidation catalyst that is obtained by the heat transmitted from the exhaust to the oxidation catalyst. Specifically, the high-load operation region is an operation region in which the temperature of the exhaust becomes higher than the temperature of the oxidation catalyst when the temperature of the oxidation catalyst is increased by the supply of unburnt fuel, as shown in FIG. 4. The alphabet "X" shown in FIGS. 3 and 4 represents a period of time required for the reaction heat of the unburnt fuel to be reflected in the temperature of the oxidation catalyst since the start of the supply of the unburnt fuel.

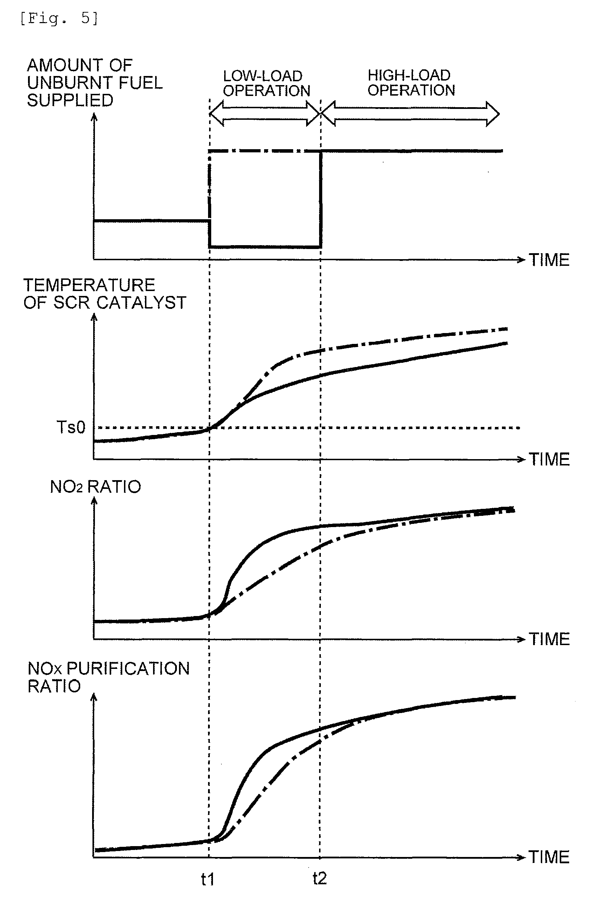

FIG. 5 is a timing chart that shows chronological changes in the amount of unburnt fuel supplied to the oxidation catalyst, the temperature of the SCR catalyst, the NO₂ ratio of the exhaust emitted from the oxidation catalyst, and the NO_{X} purification rate of the SCR catalyst, the changes being caused when supplying unburnt fuel and stopping the supply thereof are switched in accordance with the map shown in FIG. 2. The solid lines shown in FIG. 5 each show chronological changes that occur when switching between supplying unburnt fuel and stopping the supply thereof in accordance with the operating state of the internal combustion engine 1, while the dashed lines shown in FIG. 5 each show chronological changes that occur when the unburnt fuel is supplied regardless of the operating state of the internal combustion engine 1.

In FIG. 5, during the period in which the temperature of the SCR catalyst is equal to or higher than a lower limit value Ts0 and low-load operation of the internal combustion engine 1 is performed (the period between t1 and t2 shown in FIG. 5), the amount of NO that is oxidized in the oxidation catalyst becomes higher when the supply of the unburnt fuel is stopped, as compared to when the supply of the unburnt fuel is not stopped. As a result, although the speed at which the temperature of the SCR catalyst increases becomes lower when the supply of the unburnt fuel is stopped as compared to when the supply of the unburnt fuel is not stopped, the NO₂ ratio of the exhaust increases. As a result, the NO_{X} purification rate of the SCR catalyst becomes higher when the unburnt fuel is not supplied, as compared to when the unburnt fuel is supplied. Note that the process for switching between supplying unburnt fuel and stopping the supply thereof is executed until the temperature of the SCR catalyst reaches an activating temperature. The "activating temperature" here is a temperature corresponding to "predetermined temperature" according to the present invention, the lowest temperature at which the NO_{X} purification rate of the SCR catalyst increases as a result of increasing the NO₂ ratio of the exhaust.

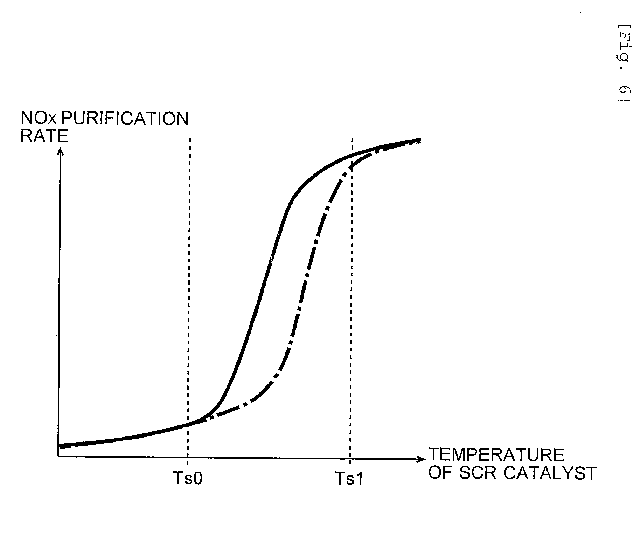

Therefore, the NO_{X} purification rate of the SCR catalyst in the period between the activation of the oxidation catalyst and the activation of the SCR catalyst (the period in which the temperature of the SCR catalyst increases from the lower limit value to the activating temperature) becomes higher when switching between supplying unburnt fuel and stopping the supply thereof in accordance with the operating state of the internal combustion engine 1, as compared to when the unburnt fuel is supplied regardless of the operating state of the internal combustion engine 1 (see FIG. 6). Note that the solid line shown in FIG. 6 indicates the NO_{X} purification rate obtained when switching between supplying unburnt fuel and stopping the supply thereof in accordance with the operating state of the internal combustion engine 1, while the dashed line indicates the NO_{X} purification rate obtained when unburnt fuel is supplied regardless of the operating state of the internal combustion engine 1. The term Ts0 shown in FIG. 6 represents the lower limit value, and the term Ts1 represents the activating temperature of the SCR catalyst.

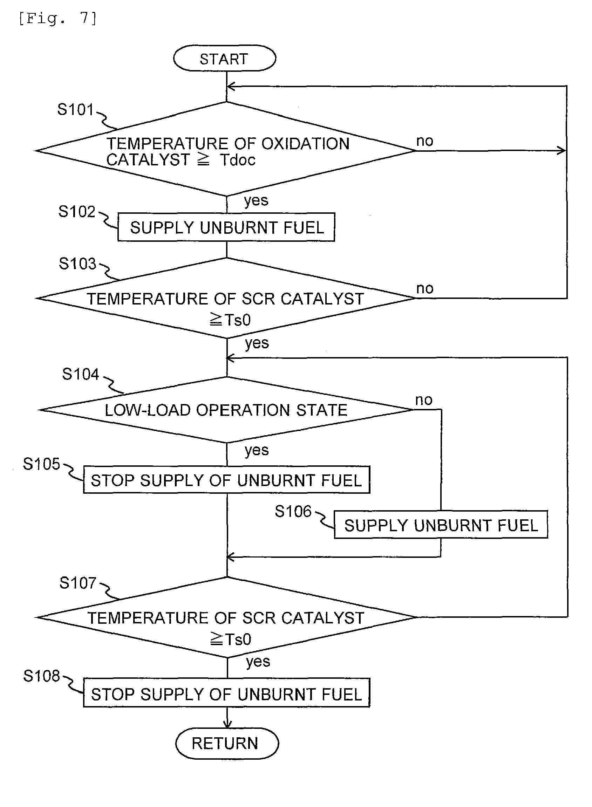

A procedure for executing the temperature increasing process according to the present embodiment is described hereinafter with reference to FIG. 7. FIG. 7 is a flowchart showing a processing routine that is executed by the ECU 10 at the time of the execution of the temperature increasing process. The processing routine of FIG. 7 is stored in the ROM or the like of the ECU 10 in advance and executed periodically by the ECU 10 (CPU).

In the processing routine of FIG. 7, first, the ECU 10 determines in the process of S101 whether the temperature of the oxidation catalyst is equal to or higher than an activating temperature Tdoc. The "activating temperature Tdoc" here means the lowest temperature expressed by the oxidation ability of the oxidation catalyst. It is assumed that the output signal of the first exhaust temperature sensor 8 is used as the temperature of the oxidation catalyst.

When the result of the determination of the process of S101 is negative, the ECU 10 executes the process of S101 again. When, on the other hand, the result of the determination of the process of S101 is positive, the ECU 10 proceeds to the process of S102.

In the process of S102, the ECU 10 supplies unburnt fuel to the oxidation catalyst. In so doing, the ECU 10 supplies the unburnt fuel to the oxidation catalyst by causing the fuel injection valve 1a of the expansion stroke cylinder or exhaust stroke cylinder to inject fuel (post injection). Note that the temperature increasing means according to the present invention is realized by causing the ECU 10 to execute the process of S102.

In S103, the ECU 10 determines whether the temperature of the SCR catalyst is equal to or higher than the lower limit value Ts0. It is assumed that the output signal of the second exhaust temperature sensor 9 is used as the temperature of the SCR catalyst. When the result of the determination of the process of S103 is negative, the ECU 10 returns to the process of S101. However, when the result of the determination of the process of S103 is positive, the ECU 10 proceeds to the process of S104.

In the process of S104, the ECU 10 determines whether the internal combustion engine 1 is in the low-load operation state. In other words, the ECU 10 determines whether the operating state of the internal combustion engine 1 defined from the engine load and engine speed belongs to the "stop the supply of unburnt fuel" section shown in FIG. 2. In so doing, it is assumed that the ECU 10 uses the output signal of the accelerator position sensor 12 (accelerator position) as the engine load.

When the result of the determination of the process of S104 is positive, the ECU 10 proceeds to the process of S105. In the process of S105, the ECU 10 stops the supply of the unburnt fuel to the oxidation catalyst. In this case, the NO₂ ratio of the exhaust flowing out of the oxidation catalyst increases, resulting in an increase in the NO_{X} purification rate of the SCR catalyst. Note that the control means according to the present invention is realized by causing the ECU 10 to execute the process of S105.

On the other hand, when the result of the determination of the process of S104 was negative, the ECU 10 proceeds to the process of S106. In the process of S106, the ECU 10 continues to supply the unburnt fuel to the oxidation catalyst. This increases the amount of heat that is contained in the exhaust flowing out of the oxidation catalyst, thereby rapidly increasing the temperature of the SCR catalyst. Such rapid increase in the temperature of the SCR catalyst leads to an increase in the NO_{X} purification rate of the SCR catalyst.

Subsequent to the execution of the process of S105 or S106, the ECU 10 executes the process of S107. In other words, in the process of S107, the ECU 10 determines whether the temperature of the SCR catalyst has increased to the activating temperature Ts1 or higher.

When the result of the determination of the process S107 is negative, the ECU 10 returns to the process of S104. When the result of the determination of the process S107 is positive, the ECU 10 proceeds to the process of S108 to end the supply of the unburnt fuel to the oxidation catalyst.

The NO_{X} purification rate of the SCR catalyst can be increased as much as possible during the period between the activation of the oxidation catalyst and the activation of the SCR catalyst by causing the ECU 10 to execute the temperature increasing process in accordance with the processing routine of FIG. 7, as described above.

### <Embodiment 2>

The second embodiment of the present invention is described next. The second embodiment provides the configurations different from those of the first embodiment, in which the descriptions of the same configurations are omitted.

The first embodiment has described an example in which the NO_{X} purification rate is increased during the period in which the temperature of the SCR catalyst increases from the lower limit value to the activating temperature. However, the present embodiment describes an example in which the NO_{X} purification rate is increased when the temperature of the SCR catalyst is equal to or higher than the activating temperature.

When the temperature of the SCR catalyst reaches the activating temperature and the intake air amount of the internal combustion engine 1 is reduced, the NO₂ ratio of the exhaust flowing into the SCR catalyst increases. As a result, the NO_{X} purification rate of the SCR catalyst rises.

Incidentally, under the condition that the temperature of the exhaust increases, there is a possibility that the NO_{X} purification rate of the SCR catalyst becomes higher when the intake air amount is increased, as compared to when the intake air amount is reduced. In other words, increasing the intake air amount of the internal combustion engine 1 when the temperature of the exhaust is high rapidly accelerates the speed at which the temperature of the SCR catalyst increases, leading to an acceleration of the speed at which the NO_{X} purification rate increases.

Of the process for increasing the intake air amount of the internal combustion engine 1 (the increasing process) and the process for reducing the intake air amount of the internal combustion engine 1 (the reducing process), the exhaust emission control system for an internal combustion engine according to the present embodiment executes the one that leads to an increase in the NO_{X} purification rate of the SCR catalyst, when the temperature of the SCR catalyst becomes equal to or higher than the activating temperature.

Specifically, the ECU 10 first computes the amount of increase in the temperature of the SCR catalyst, with the amount of increase in the temperature of the oxidation catalyst and the amount of increase in the intake air amount as parameters. Subsequently, the ECU 10 computes the amount of increase in the NO_{X} purification rate, with the amount of increase in the temperature of the SCR catalyst as a parameter (referred to as "first increase amount," hereinafter). The ECU 10 also computes the amount of increase in the NO_{X} purification rate, with the amount of decrease in the temperature of the SCR catalyst, the amount of decrease in the intake air amount, and the NO₂ ratio as parameters (referred to as "second increase amount," hereinafter). The ECU 10 executes the increasing process when the first increase amount is greater than the second increase amount, but executes the reducing process when the second increase amount is greater than the first increase amount.

When such a method switches between the increasing process for increasing the intake air amount and the reducing process for reducing the intake air amount, the NO_{X} purification rate that is obtained when the temperature of the SCR catalyst is equal to or greater than the activating temperature can be increased as much as possible.

However, when the increasing process for increasing the intake air amount is executed when the temperature of the SCR catalyst is already high enough, there is a possibility that the temperature of the SCR catalyst becomes excessively high. Therefore, when the temperature of the SCR catalyst is sufficiently high, the execution of the reducing process for reducing the intake air amount may be prioritized over the increasing process for increasing the intake air amount.

Because the exhaust has a great amount of heat when the internal combustion engine 1 is in the high-load operation state, the NO_{X} purification rate obtained when the increasing process is executed is higher than the NO_{X} purification rate obtained when the reducing process is executed. On the other hand, because the exhaust has a small amount of heat when the internal combustion engine 1 is in the low-load operation state, the NO_{X} purification rate obtained when the reducing process is executed is higher than the NO_{X} purification rate obtained when the increasing process is executed. The ECU 10, therefore, may execute the reducing process when the internal combustion engine 1 is in the low-load operation state, and execute the increasing process when the internal combustion engine 1 is in the high-load operation state.

### <Embodiment 3>

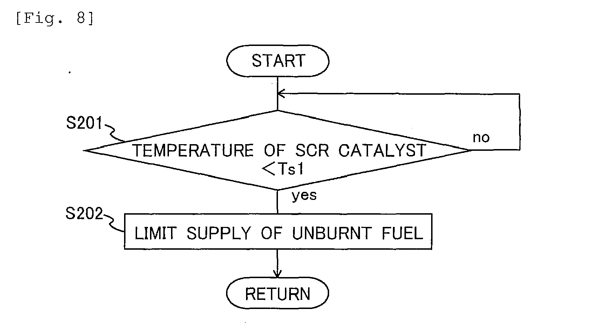

The third embodiment of the present invention is described next based on FIG. 8. This embodiment provides the configurations different from those of the first embodiment, in which the descriptions of the same configurations are omitted.

The first embodiment has described an example in which the NO_{X} purification rate is increased during the period in which the temperature of the SCR catalyst increases from the lower limit value to the activating temperature. The present embodiment, on the other hand, describes an example in which the NO_{X} purification rate is increased when the temperature of the SCR catalyst drops from the temperature range of equal to or higher than the activating temperature to a temperature range of less than the activating temperature.

When the low-load operation of the internal combustion engine 1 (e.g., idling) is continued while the temperature of the SCR catalyst is equal to or higher than the activating temperature, there is a possibility that the temperature of the SCR catalyst drops to less than the activating temperature. In other words, when the temperature of the SCR catalyst drops from the activating temperature or higher to less than the activating temperature, it can be assumed that the low-load operation state of the internal combustion engine 1 is continued. When unburnt fuel is supplied to the oxidation catalyst during the low-load operation of the internal combustion engine 1, there is a possibility that not only is the temperature of the SCR catalyst not increased adequately, but also that the NO_{X} purification rate of the SCR catalyst drops due to the decrease in the NO₂ ratio of the exhaust.

In the exhaust emission control system for an internal combustion engine according to the present embodiment, when the temperature of the SCR catalyst drops from the activating temperature or higher to less than the activating temperature, the ECU 10 does not supply unburnt fuel to the oxidation catalyst. In other words, when the temperature of the SCR catalyst drops from the activating temperature or higher to less than the activating temperature, the ECU 10 does not supply unburnt fuel to the oxidation catalyst, as in the case where the temperature of the SCR catalyst is equal to or higher than the lower limit value but less than the activating temperature and the low-load operation of the internal combustion engine 1 is performed. This method can minimize the amount of decrease in the NO_{X} purification rate of the SCR catalyst when the temperature of the SCR catalyst drops from the activating temperature or higher to less than the activating temperature.

A procedure for controlling the supply of unburnt fuel according to the present embodiment is described hereinafter with reference to FIG. 8. FIG. 8 is a flowchart showing a processing routine that is executed by the ECU 10 when the temperature of the SCR catalyst increases to the activating temperature or higher. This processing routine is stored in advance in the ROM or the like of the ECU 10.

In the processing routine shown in FIG. 8, the ECU 10 first determines in the process of S201 whether the temperature of the SCR catalyst is lowered to less than the activating temperature Ts1. When the result of the determination of the process of S201 is negative, the ECU 10 executes the process of S201 again. However, when the result of the determination of the process of S201 is positive, the ECU 10 proceeds to the process of S202, to limit the supply of unburnt fuel to the oxidation catalyst. In other words, the ECU 10 prohibits the supply of unburnt fuel to the oxidation catalyst. Note that the ECU 10 may execute the processing routine of the first embodiment (see FIG. 7) after executing the process of S202.

The foregoing embodiments can prevent a decrease in the NO_{X} purification rate of the SCR catalyst while preventing an increase in the fuel consumption accompanied by the supply of unburnt fuel, when the temperature of the SCR catalyst drops from the activating temperature or higher to less than the activating temperature.

### Explanation of The Reference Numerals

- 1: Internal combustion engine
- 1a: Fuel injection valve
- 2: Intake passage
- 3: Exhaust passage
- 4: Throttle valve
- 5: First catalyst casing
- 6: Second catalyst casing
- 7: Adding valve
- 8: First exhaust temperature sensor
- 9: Second exhaust temperature sensor
- 10: ECU
- 14: A/F sensor
- 70: Pump
- 71: Tank

## Claims

1. An exhaust emission control system for an internal combustion engine, comprising:
an oxidation catalyst disposed in an exhaust passage of the internal combustion engine;
a selective reduction catalyst that is disposed downstream of the oxidation catalyst in the exhaust passage;
temperature increasing means for increasing a temperature of exhaust flowing out of the oxidation catalyst by supplying unburnt fuel to the oxidation catalyst, when the oxidation catalyst is activated but the selective reduction catalyst is not activated; and
control means for reducing the amount of unburnt fuel to be supplied to the oxidation catalyst by the temperature increasing means, when a low-load operation of the internal combustion engine is performed during a period in which the unburnt fuel is supplied to the oxidation catalyst by the temperature increasing means.

2. The exhaust emission control system for an internal combustion engine according to claim 1, wherein when a temperature of the selective reduction catalyst becomes equal to or higher than a predetermined temperature, the control means executes either an increasing process for increasing an intake air amount of the internal combustion engine or a reducing process for reducing the intake air amount, whichever process that increases a NO_{X} purification rate of the selective reduction catalyst higher.

3. The exhaust emission control system for an internal combustion engine according to claim 2, wherein the predetermined temperature is a lowest temperature at which the NO_{X} purification rate of the selective reduction catalyst increases as a result of increasing the amount of nitrogen dioxide contained in the exhaust.

4. The exhaust emission control system for an internal combustion engine according to claim 2 or 3, wherein when the temperature of the selective reduction catalyst drops from the predetermined temperature or higher to less than the predetermined temperature, the control means reduces the amount of unburnt fuel to be supplied to the oxidation catalyst by the temperature increasing means.
